# EUROPÄISCHE PATENTANMELDUNG

(11) **EP 1 690 982 A1**
(43) Veröffentlichungstag der Anmeldung: **16.08.2006**
(21) Anmeldenummer: 05111138.3
(22) Anmeldetag: 23.11.2005
(51) Int. Cl.: D21F 1/00, D21F 7/08, D21F 11/00, D04H 1/46

(54) **Verfahren zur Herstellung einer Bespannung mit einer Musterfigur, Vorrichtung zur Durchführung des Verfahrens und Bespannung mit einer Musterfigur**

(30) Priorität: 15.02.2005 DE 102005006737
(71) Anmelder: Voith Fabrics Patent GmbH, 89522 Heidenheim (DE)
(72) Erfinder: Payne, Justin, Blackburn (GB); Ponton, David Stuart, Blackburn (GB); Rigby, Alister, Bolton (GB)

(57) **Zusammenfassung**

Es wird ein Verfahren zur Herstellung von Musterfiguren angegeben, bei dem die Musterfiguren durch ein Bespannung erzeugt werden. Überdies wird eine Vorrichtung zur Durchführung des Verfahrens angegeben, die eine in drei zueinander senkrechten Richtungen verfahrbare Polymerextrusionsvorrichtung oder wenigstens einen Laserkopf umfasst. Schließlich wird ein Bespannung beschrieben, bei dem die Polymerperlen wenigstens eine Musterfigur bilden.

## Beschreibung

Die Erfindung betrifft ein Verfahren zur Herstellung von Musterfiguren sowie eine Vorrichtung zur Durchführung des Verfahrens. Sie betrifft ferner eine Bespannung für den industriellen Einsatz, insbesondere eine Papiermaschinenbespannung.

Siebdruck für den Einsatz auf Papiermaschinenbespannungen ist bekannt. Zum Beispiel lehrt die US 5 115 544 ein Verfahren zur Herstellung einer Vliesbespannung, welche besonders gestaltete Muster in bestimmten Bereichen aufweist, wobei zum Beispiel Druck- oder Sticktechniken eingesetzt werden. Während ein fortlaufendes oder ein nicht fortlaufendes Muster durch das Stickverfahren erzielt werden kann, unterliegt das Muster frühzeitiger Verzerrung und sogar Ausfall im Einsatz, was es für die Herstellung unpraktisch erscheinen lässt.

In Bezug auf Siebdrucktechniken können verschiedene Muster mit Einschränkungen erzielt werden - z.B. bis zu maximal 70000 cP (wie durch das Brookfield Viskometer unter Einsatz des ASTM D2196-99 Prüfverfahrens gemessen) - z.B. mit Standardsiebherstellung (nämlich Saxon Screens-Verfahren). Die Nachteile des Obigen umfassen
- 0,3 mm maximale Dicke; darüber tritt ein sog. Ei skrem-Aufschlageffekt auf, wobei die Viskoelastizität des Materials selbst Luftblaseneinschlüsse und eine unebene und nicht konsistente Oberflächenqualität verursacht.
- Die minimale Dicke beträgt 0,05 mm (wie durch Saxon Screens-Daten belegt).
- Beschränkungen im Siebherstellungsvorgang (Nickel-Elektroplattierverfahren) schreiben vor, welche Linienbreite erzielt werden kann.

Wenn Laser- oder Wasserstrahl-Schneidtechnologien auf einem blanken Sieb verwendet werden, ist es möglich, begrenzte Brückenbreiten und eingeschränkte Linienbreiten zu erzielen. Jedoch kann niemals eine wirklich durchgezogene Linie erzielt werden, da dies Siebfehler verursachen würde und dieser Vorgang eine schlechtere Oberflächenqualität im Vergleich zum Nickelplattierverfahren ergibt.

WO 00/75423 A1 lehrt die Herstellung eines Gitters unter Verwendung von Strangextrusion. Dieses Verfahren erlaubt auch nicht das Erzeugen von 360° ausgerichteten, komplexen, nicht fortlaufenden Mustern - nur maschinenrichtungsorientierten. Eine weitere Beschränkung ist, dass es die Extrusion von Material "auf" die Oberfläche des Substrats lehrt und daher in der Anwendung und in der Klebewirkung beschränkt ist.

Die bekannten Musterfiguren auf industriellen Bespannungen weisen eine oftmals unzufrieden stellende Oberflächenstruktur auf, die es nicht erlaubt klare und ansprechende dekorative Muster, bspw. auf einer Papierbahn oder Tissuebahn zu erzeugen.

Der Erfindung liegt die Aufgabe zugrunde, ein verbessertes Verfahren zur Herstellung von Musterfiguren, eine geeignete Vorrichtung zur Durchführung des Verfahrens sowie eine entsprechende Bespannung zu schaffen. Es soll insbesondere eine qualitativ hochwertige Musterfigur auf einer Trägerstruktur mit einfacher Verfahrenstechnologie erzeugt werden, welche in jeder beliebigen Richtung, entweder fortlaufend oder nicht fortlaufend erzeugt werden kann und welche insbesondere geeignet ist klare und ansprechende Muster bspw. auf Papierbahnen zu erzeugen.

Das erfindungsgemäße Verfahren zur Herstellung einer industriellen Bespannung mit einer Musterfigur auf einer Trägerstruktur zeichnet sich dadurch aus, dass die Musterfigur durch Extrusion von Polymermaterial auf die Trägerstruktur erzeugt wird, wobei der Extrusionsprozess derart geführt wird, dass das Querschnittsprofil des extrudierten Polymermaterials im wesentlichen konvex ist.

Bevorzugte Ausgestaltungen des erfindungsgemäßen Verfahrens ergeben sich aus den Unteransprüchen und der nachfolgenden Beschreibung.

Die erfindungsgemäße Vorrichtung zur Durchführung des Verfahrens umfasst eine in drei zueinander senkrechten Richtungen verfahrbare Polymerextrusionsvorrichtung. Alternativ kann sie auch wenigstens einen Laserkopf umfassen.

Bevorzugte Ausführungsformen der erfindungsgemäßen Vorrichtung ergeben sich aus den Unteransprüchen und der nachfolgenden Beschreibung.

Die erfindungsgemäße Bespannung zeichnet sich dadurch aus, dass die Musterfigur die Musterfigur durch Extrusion von Polymermaterial erzeugt ist und dass das extrudierte Polymermaterial auf der Trägerstruktur einen im wesentlichen konvexen Querschnitt ausbildet. Bevorzugte Ausführungsformen ergeben sich aus den Unteransprüchen und der nachfolgenden Beschreibung.

Erfindungsgemäß wird also eine aus polymerem Material extrudierte Musterfigur auf einer Trägerstruktur geschaffen, welche fortlaufende oder nicht fortlaufende polymere Linien oder polymere Perlen umfasst.

Erfindungsgemäß kann die Trägerstruktur integraler Bestandteil der Bespannung sein oder es kann sich bei der Trägerstruktur um ein Substrat handeln, von dem die erzeugte Musterfigur abgelöst wird um eine "isolierte" Struktur auszubilden, die nachfolgend mit der Bespannung verbunden wird.

Im letzt genannten Fall kann es sich bei der Trägerstruktur um ein beschichtetes Band handeln, wodurch die Ablösung erleichtert wird.

Die Musterfigur kann zumindest abschnittweise durch eine fortlaufende Linien gleichen Querschnitts und / oder variierenden Querschnitts erzeugt werden. Der variierende Querschnitt hierbei vorzugsweise durch aneinander gereihte Polymerperlen erzeugt.

Zur Ausbildung der Musterfigur wird vorzugsweise eine dreidimensionale Polymerextrusionsvorrichtung mit wenigstens einem Ausspritzkopf mit wenigstens einem Extrusionsrohr darin verwendet wird.

Muster können zum Beispiel in AutoCAD oder in anderer Zeichensoftware erstellt werden, welche dann direkt oder indirekt an das XYZ-Bewegungssteuersystem, das die Messkopfbewegung steuert, übertragen werden kann.

Die Erfindung ist stärker wiederholbar als ähnliche Produkte, die nach dem Stand der Technik erzielbar sind.

Die Erfindung ist durch ihre geometrische Form und Konsistenz gekennzeichnet und kann durch ein oder mehrere der folgenden Merkmale definiert werden:
- Eine einsetzbare Polymerviskosität von > 70000 cP, vorzugsweise 100 K - 150 K.
- Musterhöhe (über der Trägerstruktur) 0,001 mm - 5,0 mm (Mindestwert ist 0,05, Maximalwert ist 1,0 für den Stand der Technik).
- Breite-zu-Höhe-Verhältnis von bis zu 1:1 (1:0,7 für Silikon nach dem Stand der Technik, 1:0,5 für Polyurethan).
- Eine Ablöseneigung der polymeren Musterstruktur, welche gegenüber dem Stand der Technik verbessert ist.
- Aufdruckqualität im Endmedium (Papier, Vlies) wie gemessen (z.B. durch CT-Scanner) in einem besonderen Beispiel (insbesondere für eine bevorzugte Ausführungsform).
- Eine uneingeschränkte Brückenbreite, wohingegen der Stand der Technik eine minimale Brückenbreite von 0,7:1 der Siebdicke verlangt.

Das Polymer kann Polyurethan, Silikon, Polyharnstoffe, niedermolekulare Oligomere oder jede Kombination davon umfassen.

Die Nadelgeometrie kann so gestaltet sein, um die gewünschten Profile zu extrudieren - rund, rechteckig, ploygonal usw., usw. (Beispiel für die bevorzugten Ausführungsformen).

Eine weitere Ausführungsform der Erfindung besteht darin auszunutzen, dass ein Laserkopf an Stelle eines Extrusionskopfes angebracht werden könnte.

Ein weiterer Vorteil des Systems besteht darin, eine beständig veränderbare und anpassbare Polymereindringtiefe in den Körper der Trägerstruktur auszuführen, welche die Verbindung der Polymerzähigkeit und die z-Richtungskopfsteuerung einsetzt. Folglich könnte ein 3D-Wasserzeicheneffekt auf ein Formiersieb aufgebracht werden, um die Feststoffgehaltverteilung innerhalb des Papierblatts zu steuern.

Ein weiterer Vorteil der Erfindung besteht darin, dass bei Beginn und beim Abschluss jedes Musters oder Musterelements das Rohr allmählich von der Trägerstruktur weg/hin zum Substrat bewegt wird, um die Probleme des Stands der Technik mit dem "Nachziehen" zu überwinden.

Eine weitere Ausführungsform ist das Erzeugen einer verstärkten Musterfigur, wobei ein Faden oder Garn gleichzeitig eingebracht wird und durch das Polymer festgehalten wird.

Eine weitere Ausführungsform besteht darin, zwei oder mehr Polymere gleichzeitig durch ein Zuführrohr hindurch zu leiten, um eine multifunktionale Mu sterfigur für zum Beispiel erhöhte Elastizität herzustellen.

Im Folgenden werden konkrete Beispiele bzw. bevorzugte Ausführungsformen bzw. Verfahrensweisen wiedergegeben.

Eine polymere 3D Musterfigur, wie offenkundig hierin:
1. Ein gleichmäßiger Auftrag auf einem Formiersieb oder TAD-Sieb für den Einsatz als ein dekoratives Muster.
2. Ein sich absichtlich wellendes z-Richtungsprofil - z.B. zum Herstellen von Tissue mit verstärktem Oberflächeneffekt.
3. Ein Auftrag auf ein Formiersieb, um einen Wasserzeicheneffekt durch Neuverteilung des Feststoffgehalts des Blattes zu bewirken.
4. Ein Auftraf auf oder in ein Pressfilz, um ein Muster während des Pressens des Blattes zu erzeugen, welches einen körperlichen Eindruck in das Blatt verursacht.
5. Ein Auftrag auf oder in ein Trockensieb, um ein Muster während der Trocknungsphase des Blattes zu erzeugen, welches einen körperlichen Eindruck in das Blatt verursacht.
6. Ein Auftrag auf einen bestimmten Bereich oder bestimmte Bereiche eines z.B. Formiersiebs oder TAD-Siebs zum Zwecke zum Beispiel des Versiegelns der Kanten und/oder des registerhaltigen Einbringens eines Unternehmenslogos durch Wasserzeichen oder durch körperlichen Eindruck in das Blatt.
7. Ein Auftrag von Maschinenrichtungslinien aus Polymer in verschiedener Höhe über die Breite der Grundstruktur (bspw. Gewebe, siralisierte Grundstruktur, Fadengelege). Dies dient dazu, die Druckbelastungsprofile des sich ergebenden Pressfilzes einzustellen, wie in den dynamischen Bedingungen der Presse gemessen - d.h. um die eingebauten Presslastveränderungen über die Maschinenbreite auszugleichen.
8. Ein Auftrag für den Einsatz jeder der obigen Herstellungstechniken bei Bespannungen, die der Vliesmaschine zugeordnet sind, wie sie eingesetzt werden für die Luftschichtungs- oder Spinnvliesherstellung.

Weitere Vorteile und Ausgestaltungen der Erfindung ergeben sich aus der Zeichnung; in dieser zeigen:
- Figur 1: eine dreidimensionale Polymerextrusionsvorrichtung,
- Figur 2: einen Extrusionsprofilvergleich,
- Figur 3: eine Darstellung des Nachziehens des Polymers während des Siebauftrags,
- Figur 4: eine schematische Darstellung eines Garn/Polymer-Rohrauftrags und
- Figur 5: eine schematische Darstellung eines Polymer/Polymer-Rohrauftrags.

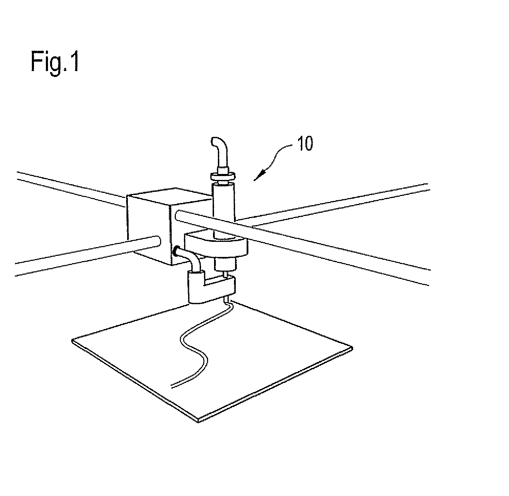

Figur 1 zeigt eine dreidimensionale Polymerextrusionsvorrichtung 10. Mittels dieser Polymerextrusionsvorrichtung 10 werden Musterfiguren mit fortlaufenden oder unterbrochenen Linien hergestellt, wobei eine dreidimensionale Polymerextrusionsvorrichtung 10 mit wenigstens einem Ausspritzkopf mit wenigstens einem Extrusionsrohr darin verwendet wird.

Das Muster kann zum Beispiel in AutoCAD oder anderer Zeichensoftware erstellt werden, welches dann direkt oder indirekt an das XYZ-Bewegungssteuersystem, das die Messkopfbewegung steuert, übertragen werden.

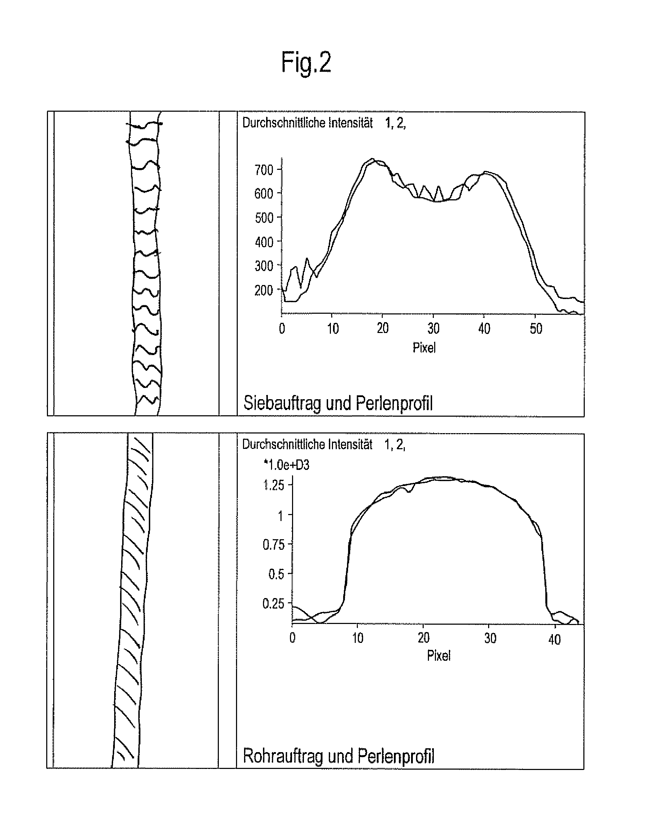

Figur 2 zeigt einen Extrusionsprofilvergleich und insbesondere den Querschnitt eines erfindungsgemäß extrudierten Polymermaterials im Vergleich zum Stand der Technik (gemessen durch ein Laserprofilabtastsystem wie dem Scantron Pro Scan).

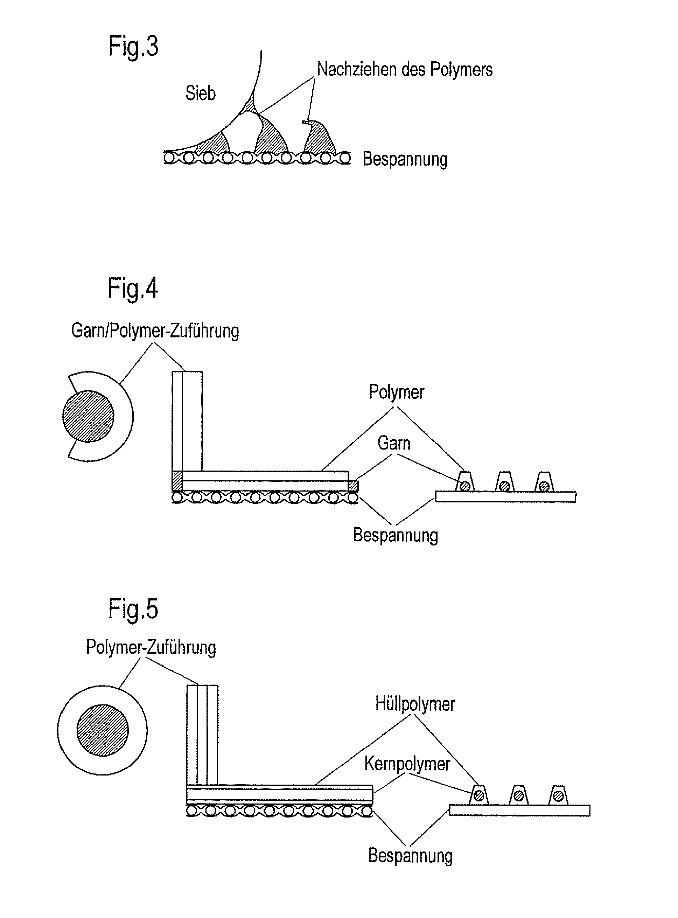

Figur 3 zeigt das Nachziehen des Polymers während des Siebauftrags. Ein Vorteil der Erfindung besteht nun darin, dass bei Beginn und beim Abschluss jedes Musters oder Musterelements das Rohr allmählich vom Substrat weg/hin zum Substrat bewegt wird, um die Probleme des Standes der Technik mit dem "Nachziehen" zu überwinden.

Figur 4 zeigt in schematischer Darstellung einen Garn/Polymer-Rohrauftrag. Dabei wird eine verstärkte Musterfigur erzeugt, indem ein Faden oder Garn gleichzeitig eingebracht und durch das Polymer festgehalten wird.

Figur 5 zeigt in schematischer Darstellung einen Polymer/Polymer-Rohrauftrag. Bei dieser weiteren Ausführungsform werden zwei oder mehr Polymere gleichzeitig durch ein Zuführrohr hindurchgeleitet, um eine multifunktionale Musterfigur für zum Beispiel erhöhte Elastizität herzustellen.

## Patentansprüche

1. Verfahren zur Herstellung einer Bespannung für den industriellen Einsatzzweck, insbesondere einer Papiermaschinenbespannung, bei dem eine Musterfigur auf einer Trägerstruktur durch Extrusion von Polymermaterial auf die Trägerstruktur derart erzeugt wird, dass das Querschnittsprofil des extrudierten Polymermaterials im wesentlichen konvex ist.

2. Verfahren nach Anspruch 1,
**dadurch gekennzeichnet ,**
**dass** eine dreidimensionale Musterfigur erzeugt wird.

3. Verfahren nach Anspruch 1 oder 2,
**dadurch gekennzeichnet ,**
**dass** die Musterfigur zumindest bereichsweise fortlaufend erzeugt wird.

4. Verfahren nach einem der vorhergehenden Ansprüche,
**dadurch gekennzeichnet ,**
**dass** das Musterfigur zumindest bereichsweise nicht fortlaufend erzeugt wird.

5. Verfahren nach einem der Ansprüche 1 bis 4,
**dadurch gekennzeichnet ,**
**dass** die Musterfigur als isolierte Struktur erzeugt wird.

6. Verfahren nach Anspruch 5,
**dadurch gekennzeichnet ,**
**dass** die Musterfigur auf einem für ein anschließendes Ablösen entsprechend beschichteten Band ausgebildet wird.

7. Verfahren nach einem der vorhergehenden Ansprüche,
**dadurch gekennzeichnet ,**
**dass** die Musterfigur zumindest bereichsweise in einer fortlaufenden Linie von im wesentlichen gleichem Querschnitt erzeugt wird.

8. Verfahren nach einem der vorhergehenden Ansprüche,
**dadurch gekennzeichnet ,**
**dass** die Musterfigur zumindest bereichsweise in einer fortlaufenden Linie mit variierendem Querschnitt erzeugt wird.

9. Verfahren nach Anspruch 8,
**dadurch gekennzeichnet ,**
**dass** der variierende Querschnitt durch Aneinanderreihung Polymerperlen erzeugt wird.

10. Verfahren nach einem der vorhergehenden Ansprüche,
**dadurch gekennzeichnet ,**
**dass** das Polymerperlensystem unter Verwendung einer in drei zueinander senkrechten Richtungen verfahrbaren Polymerextrusionsvorrichtung (10) erzeugt wird.

11. Verfahren nach Anspruch 10,
**dadurch gekennzeichnet ,**
**dass** die Polymerextrusionsvorrichtung (10) zur Erzeugung dreidimensionaler Musterfiguren ansteuerbar ist.

12. Verfahren nach einem der Ansprüche 10 bis 11,
**dadurch gekennzeichnet ,**
**dass** eine Polymerextrusionsvorrichtung (10) mit wenigstens einem Ausspritz- oder Extrusionskopf verwendet wird.

13. Verfahren nach einem der Ansprüche 10 bis 12,
**dadurch gekennzeichnet ,**
**dass** eine Polymerextrusionsvorrichtung (10) mit wenigstens einem Extrusionsrohr verwendet wird.

14. Verfahren nach einem der vorhergehenden Ansprüche,
**dadurch gekennzeichnet ,**
**dass** die Polymerviskosität > 70 000 cP gewählt wird.

15. Verfahren nach Anspruch 14,
**dadurch gekennzeichnet ,**
**dass** die Polymerviskosität in einem Bereich von etwa 100 000 cP bis etwa 150 000 cP liegt.

16. Verfahren nach einem der vorhergehenden Ansprüche,
**dadurch gekennzeichnet ,**
**dass** die Musterhöhe in einem Bereich von etwa 0,001 mm bis etwa 5 mm liegt.

17. Verfahren nach einem der vorhergehenden Ansprüche,
**dadurch gekennzeichnet ,**
**dass** die Musterhöhe über dem Substrat in einem Bereich von etwa 0,001 mm bis etwa 5 mm liegt.

18. Verfahren nach einem der vorhergehenden Ansprüche,
**dadurch gekennzeichnet ,**
**dass** das Verhältnis Musterbreite zu Musterhöhe in einem Bereich bis zu 1 : 1 liegt.

19. Verfahren nach einem der vorhergehenden Ansprüche,
**dadurch gekennzeichnet ,**
**dass** zur Erzeugung der polymeren Musterfigur ein Polymer verwendet wird, das zumindest einen der folgenden Bestandteile umfasst: Silikon, Polyharnstoffe, niedermolekulare Oligomere.

20. Verfahren nach einem der vorhergehenden Ansprüche,
**dadurch gekennzeichnet ,**
**dass** die Musterfigur zumindest bereichsweise unter Verwendung wenigstens eines Laserkopfes erzeugt wird.

21. Verfahren nach einem der vorhergehenden Ansprüche,
**dadurch gekennzeichnet ,**
**dass** bei einer Ausbildung der Musterfigur auf der Trägerstruktur die Polymereindringtiefe variierbar ist.

22. Verfahren nach Anspruch 23,
**dadurch gekennzeichnet ,**
**dass** die Polymereindringtiefe über die Polymerzähigkeit und/oder die Ansteuerung insbesondere eines Ausspritz- oder Extrusionskopfes in Höhen-oder z-Richtung variiert wird.

23. Verfahren nach einem der vorhergehenden Ansprüche,
**dadurch gekennzeichnet ,**
**dass** eine verstärkte Musterfigurerzeugt wird, indem mit der Abgabe des Polymers in dieses gleichzeitig ein Faden oder Garn eingebracht wird.

24. Verfahren nach einem der vorhergehenden Ansprüche,
**dadurch gekennzeichnet ,**
**dass** zur Erzeugung einer multifunktionalen Musterfigur gleichzeitig zwei oder mehrere Polymere durch ein Extrusions- oder Zuführrohr hindurch geleitet werden.

25. Verfahren nach einem der vorhergehenden Ansprüche,
**dadurch gekennzeichnet ,**
**dass** insbesondere zur Erzeugung einer dekorativen Musterfigur für den Einsatz im Tissuebereich das Polymermaterial auf ein Formiersieb oder auf ein TAD-Sieb aufgetragen wird.

26. Verfahren nach einem der vorhergehenden Ansprüche,
**dadurch gekennzeichnet ,**
**dass** die Musterfigur zumindest bereichsweise mit einem welligen z-Richtungsprofil erzeugt wird.

27. Verfahren nach einem der vorhergehenden Ansprüche,
**dadurch gekennzeichnet ,**
**dass** die Musterfigur auf ein Formiersieb aufgetragen wird, um durch eine Neuverteilung des Feststoffgehalts des Blattes einen Warenzeicheneffekt zu erzeugen.

28. Verfahren nach einem der vorhergehenden Ansprüche,
**dadurch gekennzeichnet ,**
**dass** die Musterfigur auf ein Pressfilz aufgetragen oder in dieses eingebracht wird, um während des Pressens des Blattes ein Muster zu erzeugen, das einen körperlichen Eindruck in das Blatt bewirkt.

29. Verfahren nach einem der vorhergehenden Ansprüche,
**dadurch gekennzeichnet ,**
**dass** die Musterfigur auf ein Trockensieb aufgetragen oder in dieses eingebracht wird, um während der Trocknungsphase des Blattes ein Muster zu erzeugen, das einen körperlichen Eindruck in das Blatt bewirkt.

30. Verfahren nach einem der vorhergehenden Ansprüche,
**dadurch gekennzeichnet ,**
**dass** die Musterfigur auf einen oder mehrere bestimmte Bereiche eines Bandes oder Siebes, insbesondere eines Formiersiebes oder TAD-Siebes, aufgetragen wird, um insbesondere eine Versiegelung der Kanten und/oder ein registerhaltiges Einbringen z.B. eines Unternehmenslogos durch Wasserzeichen oder durch einen körperlichen Ei ndruck in das Blatt zu bewirken.

31. Verfahren nach einem der vorhergehenden Ansprüche,
**dadurch gekennzeichnet ,**
**dass** Maschinenrichtungslinien aus Polymermaterial verschiedener Höhe über die Breite einer Bespannung aufgetragen werden.

32. Verfahren nach einem der vorhergehenden Ansprüche,
**dadurch gekennzeichnet ,**
**dass** die Musterfigur auf eine einer Vliesmaschine zugeordnete Bespannungen aufgetragen wird, die insbesondere für die Luftschichtungs- oder Spinnvliesherstellung einsetzbar ist.

33. Vorrichtung zur Durchführung des Verfahrens nach einem der vorhergehenden Ansprüche mit einer in drei zueinander senkrechten Richtungen verfahrbaren Polymerextrusionsvorrichtung (10).

34. Vorrichtung nach Anspruch 33,
**dadurch gekennzeichnet ,**
**dass** die Polymerextrusionsvorrichtung (10) zur Erzeugung dreidimensionaler Musterfiguren ansteuerbar ist.

35. Vorrichtung nach Anspruch 33 oder 34,
**dadurch gekennzeichnet ,**
**dass** die Polymerextrusionsvorrichtung (10) wenigstens einen Ausspritz-oder Extrusionskopf umfasst.

36. Vorrichtung nach einem der vorhergehenden Ansprüche,
**dadurch gekennzeichnet ,**
**dass** die Polymerextrusionsvorrichtung (10) wenigstens ein Extrusionsrohr umfasst.

37. Vorrichtung nach Anspruch 36,
**dadurch gekennzeichnet ,**
**dass** zur Erzeugung einer multifunktionalen polymeren Musterfigur über das Extrusionsrohr gleichzeitig zwei oder mehrere Polymere zuführbar sind.

38. Vorrichtung nach einem der vorhergehenden Ansprüche,
**dadurch gekennzeichnet ,**
**dass** sie zur Erzeugung einer verstärkten Musterfigur Mittel umfasst, um mit der Abgabe des Polymers in dieses gleichzeitig einen Faden oder Garn einzubringen.

39. Vorrichtung zur Durchführung des Verfahrens nach einem der Ansprüche 1 bis 32,
**dadurch gekennzeichnet ,**
**dass** sie wenigstens einen Laserkopf umfasst.

40. Bespannung, insbesondere Papiermaschinenbespannung mit einer Trägerstruktur und mit einer auf der Trägerstruktur angeordneten Musterfigur,
**dadurch gekennzeichnet ,**
**dass** die Musterfigur durch Extrusion von Polymermaterial erzeugt ist und
**dass** das extrudierte Polymermaterial auf der Trägerstruktur einen im wesentlichen konvexen Querschnitt ausbildet.

41. Bespannung nach Anspruch 40,
**dadurch gekennzeichnet ,**
**dass** die Musterfigur dreidimensional ist.

42. Bespannung nach Anspruch 40 oder 41,
**dadurch gekennzeichnet ,**
**dass** die Musterfigur zumindest bereichsweise fortlaufend erzeugt ist.

43. Bespannung nach einem der vorhergehenden Ansprüche,
**dadurch gekennzeichnet ,**
**dass** die Musterfigur zumindest bereichsweise nicht fortlaufend erzeugt ist.

44. Bespannung nach einem Ansprüche 40 bis 43,
**dadurch gekennzeichnet ,**
**dass** die Musterfigur als isolierte Struktur erzeugt ist.

45. Bespannung nach einem der vorhergehenden Ansprüche,
**dadurch gekennzeichnet ,**
**dass** die Musterfigur zumindest bereichsweise durch eine fortlaufende Linie gleichen Querschnitts gebildet wird.

46. Bespannung nach einem der vorhergehenden Ansprüche,
**dadurch gekennzeichnet ,**
**dass** die Musterfigur zumindest bereichsweise durch eine fortlaufende Linie mit sich änderndem Querschnitt gebildet wird.

47. Bespannung nach Anspruch 46,
**dadurch gekennzeichnet ,**
**dass** der variierende Querschnitt durch aneinander gereihte Polymerperlen gebildet wird.

48. Bespannung nach einem der vorhergehenden Ansprüche,
**dadurch gekennzeichnet ,**
**dass** die Polymerviskosität > 70 000 cP ist.

49. Bespannung nach Anspruch 47,
**dadurch gekennzeichnet ,**
**dass** die Polymerviskosität in einem Bereich von etwa 100 000 cP bis etwa 150 000 cP liegt.

50. Bespannung nach einem der vorhergehenden Ansprüche,
**dadurch gekennzeichnet ,**
**dass** die Musterhöhe in einem Bereich von etwa 0,001 mm bis etwa 5 mm liegt.

51. Bespannung nach einem der vorhergehenden Ansprüche,
**dadurch gekennzeichnet ,**
**dass** die Musterhöhe über dem Substrat in einem Bereich von etwa 0,001 mm bis etwa 5 mm liegt.

52. Bespannung nach einem der vorhergehenden Ansprüche,
**dadurch gekennzeichnet ,**
**dass** das Verhältnis Musterbreite zu Musterhöhe in einem Bereich bis zu 1 : 1 liegt.

53. Bespannung nach einem der vorhergehenden Ansprüche,
**dadurch gekennzeichnet ,**
**dass** die Musterfigur einem Polymer besteht, das zumindest einen der folgenden Bestandteile umfasst: Silikon, Polyharnstoffe, niedermolekulare Oligomere.

54. Bespannung nach einem der vorhergehenden Ansprüche,
**dadurch gekennzeichnet ,**
**dass** die Musterfigur zumindest bereichsweise durch Lasern erzeugt ist.

55. Bespannung nach einem der vorhergehenden Ansprüche,
**dadurch gekennzeichnet ,**
**dass** die Musterfigur durch einen in das Polymer eingebrachten Faden oder Garn verstärkt ist.

56. Bespannung nach einem der vorhergehenden Ansprüche,
**dadurch gekennzeichnet ,**
**dass** die Musterfigur durch gleichzeitiges Zuführen von zwei oder mehreren Polymeren erzeugt ist.

57. Bespannung nach einem der vorhergehenden Ansprüche,
**dadurch gekennzeichnet ,**
**dass** die Musterfigur zumindest bereichsweise ein welliges z-Richtungsprofil besitzt.
